# EUROPÄISCHE PATENTANMELDUNG

(11) **EP 3 871 883 A1**
(43) Veröffentlichungstag der Anmeldung: **01.09.2021**
(21) Anmeldenummer: 21152550.6
(22) Anmeldetag: 20.01.2021
(51) Int. Cl.: B33Y 80/00, A46B 3/04, A46B 9/04, A46B 5/00, A46B 9/02, A46B 9/00

(54) **ZAHNBÜRSTENKOPF, ZAHNBÜRSTE, VERFAHREN ZUR HERSTELLUNG EINES ZAHNBÜRSTENKOPFES, VERFAHREN ZUR HERSTELLUNG EINER ZAHNBÜRSTE, ADDITIVE FERTIGUNGSVORRICHTUNG, COMPUTERPROGRAMM UND COMPUTERLESBARES MEDIUM**

(30) Priorität: 28.02.2020 DE 102020105351
(71) Anmelder: Zahoransky AG, 79674 Todtnau (DE)
(72) Erfinder: Kiefer, Florian, 79677 Fröhnd (DE); Kumpf, Ingo, 79674 Todtnau (DE); König, Marc, 79100 Freiburg (DE)
(74) Vertreter: Mertzlufft-Paufler, Cornelius

(57) **Zusammenfassung**

Die Erfindung befasst sich mit Verbesserungen auf dem technischen Gebiet der Zahnbürsten. Hierzu wird unter anderem ein Zahnbürstenkopf (3) vorgeschlagen, dessen Reinigungselementträger (11) und/oder zumindest ein Reinigungselement (12, 12a, 12b, 12c) des Zahnbürstenkopfes (3) additiv hergestellt ist/sind (Fig. 1).

## Beschreibung

Die Erfindung betrifft einen Zahnbürstenkopf, eine Zahnbürste, ein Verfahren zur Herstellung eines Zahnbürstenkopfes, ein Verfahren zur Herstellung einer Zahnbürste, eine additive Fertigungsvorrichtung, ein Computerprogramm und ein computerlesbares Medium.

Ganz allgemein besteht heutzutage ein zunehmender Bedarf, auch Produkte des alltäglichen Gebrauchs gemäß Benutzerwünschen zu individualisieren. Auch bei Zahnbürsten ist daher folgerichtig eine Zunahme an unterschiedlichen Designs und Gestaltungsformen zu beobachten. Die Designanpassungen erfassen dabei auch die für die Reinigungswirkung der Zahnbürsten verantwortlichen Teile und Bereiche, wie zum Beispiel den Zahnbürstenkopf und seine Reinigungselemente. Die bisher zur Fertigung von Zahnbürsten verwendeten Verfahren können an ihre Grenzen stoßen, die gewünschte Variantenvielfalt in wirtschaftlich vertretbarer Weise bereitzustellen.

Aufgabe der Erfindung ist es daher, einen Zahnbürstenkopf, eine Zahnbürste, ein Verfahren zur Herstellung eines Zahnbürstenkopfes, ein Verfahren zur Herstellung einer Zahnbürste, eine additive Fertigungsvorrichtung, ein Computerprogramm und ein computerlesbares Medium der eingangs genannten Art bereitzustellen, die die vergleichsweise einfache Berücksichtigung individueller Gestaltungsanforderungen erlauben.

Zur Lösung der Aufgabe wird zunächst ein Zahnbürstenkopf vorgeschlagen, der die Mittel und Merkmale des unabhängigen, auf einen derartigen Zahnbürstenkopf gerichteten Anspruchs umfasst. Zur Lösung der Aufgabe wird somit insbesondere ein Zahnbürstenkopf mit einem Reinigungselementträger und mit zumindest einem an dem Reinigungselementträger angeordneten Reinigungselement vorgeschlagen, wobei der Reinigungselementträger und/oder dass zumindest eine Reinigungselement additiv hergestellt, insbesondere 3D-gedruckt ist/sind.

Der Reinigungselementträger und das zumindest eine daran angeordnete Reinigungselement des Zahnbürstenkopfes sind die für ihre Reinigungswirkung maßgeblichen Bestandteile der Zahnbürste. Die Herstellung des Reinigungselementträgers und/oder des zumindest einen Reinigungselements des Zahnbürstenkopfes mittels eines additiven Fertigungsverfahrens, insbesondere mittels 3D-Drucks erlaubt eine nahezu beliebige Individualisierung des Zahnbürstenkopfes auf vergleichsweise einfache Weise. Das zumindest eine additiv hergestellte Reinigungselement des Zahnbürstenkopfes kann nahezu jede beliebige Form annehmen und so an individuelle Anforderungen eines Benutzers, beispielsweise an anatomische und/oder gebissanatomische Anforderungen, angepasst sein. Auf diese Weise ist es möglich, einen Zahnbürstenkopf mit zumindest einem Reinigungselement bereitzustellen, das maßgeschneidert auf eine Gebissanatomie eines Benutzers gestaltet sein kann.

Durch die additive Herstellung des Reinigungselementträgers des Zahnbürstenkopfes ist es auch möglich, diesen nicht nur vergleichsweise einfach in unterschiedlichen Größen, sondern auch in unterschiedlichen Gestaltungsformen anzubieten.

Durch die additive Herstellung des Reinigungselementträgers und/oder des wenigstens einen Reinigungselements des Zahnbürstenkopfes ist es ferner möglich, den erfindungsgemäßen Zahnbürstenkopf ohne eine aufwendige Bürstenherstellungsmaschine zu produzieren. Die Herstellung des erfindungsgemäßen Zahnbürstenkopfes kann bei Bedarf sogar vom Benutzer oder Endverbraucher selbst auf einer eigenen additiven Fertigungsvorrichtung, beispielsweise auf einem 3D-Drucker, zu Hause durchgeführt werden.

Bei einer Ausführungsform des Zahnbürstenkopfes ist vorgesehen, dass zumindest ein Reinigungselement des Zahnbürstenkopfes ein additiv hergestelltes, insbesondere 3D-gedrucktes Borstenfilament ist. Die Verwendung eines additiv hergestellten, insbesondere 3D-gedruckten Borstenfilaments an dem Zahnbürstenkopf vermeidet die vergleichsweise aufwendige Handhabung von Borstenfilamenten und ebenso die vergleichsweise aufwendigen Verfahrensschritte zur Befestigung des zumindest einen Borstenfilaments an dem Reinigungselementträger. Durch ein additives Fertigungsverfahren kann das zumindest eine als Borstenfilament ausgebildete Reinigungselement an nahezu beliebiger Stelle des Reinigungselementträgers des Zahnbürstenkopfes aufgebracht werden. Dies ermöglicht dem Hersteller des Zahnbürstenkopfes eine bisher ungeahnte Gestaltungsfreiheit.

Bei einer Ausführungsform des Zahnbürstenkopfes ist vorgesehen, dass zumindest ein Reinigungselement seitlich an den Reinigungselementträger angebracht, insbesondere additiv angeformt, insbesondere 3D-aufgedruckt ist. Vor allem dann, wenn das zumindest eine Reinigungselement seitlich an dem Reinigungselementträger angebracht werden soll, kann es vorteilhaft sein, das zumindest eine Reinigungselement additiv an den Reinigungselementträger anzuformen. Seitlich kann in diesem Zusammenhang bedeuten, dass das zumindest eine Reinigungselement an einer Seitenfläche des Reinigungselementträgers angebracht ist, die quer oder rechtwinklig zu einer Vorderseite des Reinigungselementträgers ausgerichtet ist, an der zumindest ein weiteres Reinigungselement des Zahnbürstenkopfes, beispielsweise zumindest ein weiteres Borstenfilament oder auch ein Besatz aus Borstenfilamenten oder ein Besatz aus Borstenfilamenten bestehenden Borstenbündeln angeordnet sein kann.

Bei einer Ausführungsform des Zahnbürstenkopfes ist vorgesehen, dass zumindest ein, insbesondere additiv hergestelltes, vorzugsweise 3D-gedrucktes, Reinigungselement zwei einander abgewandte Seitenflächen des Reinigungselementträgers miteinander verbindet und/oder eine Vorderseite des Reinigungselementträgers überspannt. Dabei kann das die Vorderseite des Reinigungsträgers überspannende Reinigungselement mit einem ersten seiner beiden Enden an einer ersten Seitenfläche des Reinigungselementträgers und mit einem zweiten seiner beiden Enden an einer zweiten Seitenfläche des Reinigungselementträgers befestigt sein. Wenn das Reinigungselement, dass die zwei Seitenflächen des Reinigungselementträgers dann miteinander verbindet, ein additiv hergestelltes Reinigungselement ist, kann dies die Befestigung des Reinigungselements an dem Reinigungselementträger des Zahnbürstenkopfes signifikant vereinfachen. Eine gesonderte Vorrichtung zur Bereitstellung und Handhabung des zu befestigenden Reinigungselementes ist hierbei entbehrlich. Das Reinigungselement kann in nahezu jeder beliebigen Ausgestaltung additiv erzeugt, also beispielsweise mittels Schichtauftrag gedruckt, und dabei an dem Reinigungselementträger und seinen Seitenflächen festgelegt werden.

Bei einer Ausführungsform des Zahnbürstenkopfes weist dieser zumindest ein, insbesondere additiv hergestelltes, vorzugsweise 3D-gedrucktes, Reinigungselement auf, das an seinem freien Ende zumindest ein Reinigungssegment, insbesondere zumindest zwei Reinigungssegmente, vorzugsweise mehrere, Reinigungssegmente aufweist. Ein derartiges Reinigungselement kann an seinem freien Ende zumindest ein oder auch mehrere Reinigungssegmente aufweisen, was die Reinigungswirkung des Reinigungselements positiv beeinflussen kann. So ist es beispielsweise möglich, ein Reinigungselement bereitzustellen, an dessen freiem Ende zumindest ein oder zwei Reinigungssegmente angeordnet sind, die jeweils einen im Vergleich zu einem Querschnitt des Reinigungselements in einem den Reinigungssegmenten benachbarten Abschnitt kleinere Querschnitte aufweisen. Auf diese Weise kann das Reinigungselement aufgrund seiner feineren Reinigungssegmente beispielsweise besonders gut zur Zahnzwischenreinigung geeignet sein.

Die zuvor erwähnten Reinigungssegmente können bei einer Ausführungsform des Zahnbürstenkopfes beispielsweise nagelförmig, hakenförmig oder auch kugelförmig gestaltet sein.

Bei einer Ausführungsform des Zahnbürstenkopfes ist vorgesehen, dass zumindest ein, insbesondere additiv hergestelltes, vorzugsweise 3D-gedrucktes, Reinigungselement einen Hohlraum zur Aufnahme einer wirksamen Substanz, beispielsweise eines Reinigungsmittels, und eine Austrittsöffnung aus dem Hohlraum zur Abgabe der Substanz aufweist. Auf diese Weise ist es möglich, ein Reinigungselement an dem Zahnbürstenkopf vorzusehen, in dessen Hohlraum als Substanz beispielsweise ein Zahnreinigungsmittel eingebracht werden kann. Die Substanz in dem Hohlraum kann bei Gebrauch des Zahnbürstenkopfes über die Austrittsöffnung in einen Mundraum eines Benutzers abgegeben werden.

Bei einer weiteren Ausführungsform des Zahnbürstenkopfes ist vorgesehen, dass der Reinigungselementträger zumindest ein Aufnahmeloch für ein Reinigungselement aufweist, wobei das Aufnahmeloch durch additiven Materialauftrag, insbesondere durch 3D-Druck hergestellt ist. Auf diese Weise kann ein Zahnbürstenkopf mit einem Reinigungselementträger bereitgestellt werden, der sich zur Aufnahme konventionell hergestellter Borstenfilamente und/oder Borstenbündel, beispielsweise eignet. So kann beispielsweise ein Reinigungselement wie ein Borstenbündel mithilfe eines Ankers in dem durch additiven Materialauftrag in dem Reinigungselementträger erzeugten Aufnahmeloch befestigt werden oder sein.

Bei einer weiteren Ausführungsform des Zahnbürstenkopfes ist vorgesehen, dass der Zahnbürstenkopf, insbesondere an dem Reinigungselementträger, eine Befestigungsschnittstelle zur Befestigung an einem Zahnbürstengriff aufweist. Auf diese Weise ist es möglich, den Zahnbürstenkopf als separates Teil bereitzustellen und diesen an einem bereitgehaltenen Zahnbürstengriff vorzugsweise lösbar, festzulegen. So kann der Zahnbürstengriff, der in der Regel den größten Anteil an der Gesamtmasse einer Zahnbürste hat, über mehrere Zahnbürstenkopf-Nutzungszyklen verwendet werden und/oder beispielsweise aus einem umweltverträglichen, vorzugsweise aus einem biologisch abbaubaren Material, z.B. aus Holz, bestehen. Somit begünstig diese Variante des Zahnbürstenkopfes eine umweltfreundliche und ressourcenschonende Zahnbürstennutzung.

Der Zahnbürstenkopf kann somit als Wechselkopf ausgebildet sein, der sich reversibel von dem Zahnbürstengriff lösen lässt. Die Trennung des Zahnbürstenkopfes vom Zahnbürstengriff nach der Benutzung der Zahnbürste kann vorteilhaft sein, um eine zuverlässige Trocknung des Zahnbürstengriffs einerseits und des Zahnbürstenkopfes andererseits zu ermöglichen. Insbesondere dann wenn der Zahnbürstengriff aus Holz oder einem Holzwerkstoff besteht, kann eine zuverlässige Trocknung hilfreich sein, um eine feuchtigkeitsbedingte Beschädigung des Zahnbürstengriffes zu vermeiden und die Zahnbürste in einem hygienisch einwandfreien Zustand zu halten.

Die Befestigungsschnittstelle kann zumindest ein Rastelement einer Rastverbindung, ein Befestigungszapfen und/oder auch eine Zapfenaufnahme aufweisen oder umfassen. Die Befestigungsschnittstelle mit ihren zur Befestigung vorgesehenen Elementen kann dabei vorzugsweise ebenfalls additiv hergestellt sein. Auf diese Weise lassen sich Geometrien an der Befestigungsschnittstelle erzeugen, die nicht ohne weiteres beispielsweise im Spritzguss hergestellt werden können. Die Befestigungsschnittstelle kann dabei zumindest einen konventionell nicht entformbaren Hinterschnitt aufweisen.

Zur Lösung der Aufgabe wird auch eine Zahnbürste mit einem Zahnbürstengriff und einem Zahnbürstenkopf nach einem der auf einen solchen Zahnbürstenkopf gerichteten Ansprüche vorgeschlagen.

Bei einer Ausführungsform der Zahnbürste kann vorgesehen sein, dass der Zahnbürstengriff und der Zahnbürstenkopf lösbar miteinander verbindbar oder miteinander verbunden sind. Bei einer Ausführungsform der Zahnbürste ist vorgesehen, dass der Zahnbürstengriff eine Aufnahme zum Einsetzen des Zahnbürstenkopfes aufweist. Auf diese Weise kann der Zahnbürstenkopf als Wechselkopf an dem Zahnbürstengriff verwendet werden. Der Zahnbürstengriff kann dabei über mehrere Nutzungszyklen mit unterschiedlichen Zahnbürstenköpfe verwendet werden, ehe er entsorgt wird.

Bei einer Ausführungsform ist vorgesehen, dass die Aufnahme für den Zahnbürstenkopf eine Einführungsnut und/oder eine Einrastnut zur Festlegung des Zahnbürstenkopfes an dem Zahnbürstengriff aufweist. Durch die Einführungsnut kann der Zahnbürstenkopf in seine innerhalb der Aufnahme befindlichen Gebrauchsstellung eingeführt werden. Mithilfe der Einrastnut ist es möglich, den Zahnbürstenkopf lösbar an dem Zahnbürstengriff festzulegen.

Bei einer Ausführungsform der Zahnbürste ist vorgesehen, dass zwischen dem Zahnbürstengriff und dem Zahnbürstenkopf eine Steckverbindung und/oder eine Rastverbindung ausgebildet ist/sind. Mithilfe einer derartigen Steckverbindung und/oder Rastverbindung kann der Zahnbürstenkopf vorzugsweise lösbar mit dem Zahnbürstengriff verbunden sein. Die Steckverbindung und/oder die Rastverbindung, insbesondere die diese bildendenden Elemente an dem Zahnbürstengriff und an dem Zahnbürstenkopf, können vorzugsweise additiv hergestellt, insbesondere 3D-gedruckt sein.

Bei einer weiteren Ausführungsform der Zahnbürste ist vorgesehen, dass der Zahnbürstengriff einen Befestigungszapfen aufweist, auf den der Bürstenkopf mit seiner dazu passenden Zapfenaufnahme aufsteckbar ist. Insbesondere dann, wenn sowohl an dem Befestigungszapfen des Zahnbürstengriffs als auch in der dazu passenden Zapfenaufnahme des Zahnbürstenkopfes zueinander passende Rastelemente einer Rastverbindung ausgebildet sind, ist es möglich, den Zahnbürstenkopf sicher und dennoch lösbar an dem Zahnbürstengriff zu befestigen.

Bei einer bevorzugten Ausführungsform der Zahnbürste ist vorgesehen, dass der Zahnbürstengriff aus einem biologisch-abbaubaren Material, insbesondere aus Holz, aus einem Holzwerkstoff und/oder aus einem biologisch-abbaubaren Kunststoff besteht. Aufgrund seines Werkstoffes lässt sich der Zahnbürstengriff der Zahnbürste somit umweltfreundlich entsorgen und/oder wiederverwerten. Ebenso kann auch der Zahnbürstenkopf der Zahnbürste aus einem biologisch-abbaubaren Material, zum Beispiel aus einem biologisch-abbaubaren Kunststoff bestehen.

Bei einer bevorzugten Ausführungsform der Zahnbürste weist diese, insbesondere in und/oder an ihrem Zahnbürstengriff und/oder in oder an ihrem Zahnbürstenkopf, zumindest ein, vorzugsweise elektrisches und/oder elektronisches, Funktionsteil auf. Das zumindest eine Funktionsteil kann beispielsweise ein Motor, ein Vibrator, ein vorzugsweise drahtloses Kommunikationsmodul und/oder ein Sensor sein.

Auch der Zahnbürstengriff der Zahnbürste kann additiv hergestellt, insbesondere 3D-gedruckt sein. Insbesondere dann, wenn der Zahnbürstengriff der Zahnbürste ein insbesondere elektrisches und/oder elektronisches Funktionsteil aufweist, kann es zweckmäßig sein, das Funktionsteil bereitzuhalten und den Zahnbürstengriff durch additiven Materialauftrag um das bereitgehaltene Funktionsteil herum aufzubauen. Auf diese Weise wird eine Zahnbürste geschaffen, deren Zahnbürstengriff das zumindest eine Funktionsteil der Zahnbürste ummantelt und in sich aufnimmt, ohne dass der Zahnbürstengriff eine Materialschwächung, beispielsweise eine Einsetzöffnung, durch die das Funktionsteil in das Innere des Zahnbürstengriffs eingesetzt wird, aufweist.

Bei einer Ausführungsform der Zahnbürste sind sowohl der Zahnbürstenkopf als auch der Zahnbürstengriff additiv hergestellt, insbesondere 3D-gedruckt. Dabei können der Zahnbürstenkopf und der Zahnbürstengriff beispielsweise durch additiven Materialauftrag untrennbar miteinander verbunden sein und/oder aus unterschiedlichen Materialien bestehen. Es ist auch möglich, den Zahnbürstenkopf und den Zahnbürstengriff als separate Teile additiv herzustellen und anschließend lösbar miteinander zu verbinden, wie es zuvor bereits erwähnt wurde. Der Zahnbürstenkopf kann als Wechselkopf verwendet werden und nach seinem Verbrauch durch einen anderen Zahnbürstenkopf an dem Zahnbürstengriff ersetzt werden.

Zur Lösung der Aufgabe wird auch ein Verfahren zur Herstellung eines für einen Benutzer individualisierten Zahnbürstenkopfes vorgeschlagen, das die Mittel und Merkmale des unabhängigen auf ein derartiges Verfahren gerichteten Anspruchs aufweist. Zur Lösung der Aufgabe wird somit insbesondere ein Verfahren zur Herstellung eines für einen Benutzer individualisierten Zahnbürstenkopfes vorgeschlagen, wobei benutzerindividualisierte Produktionsdaten an eine Steuervorrichtung einer additiven Fertigungsvorrichtung übertragen werden. In Abhängigkeit der benutzerindividualisierten Produktionsdaten wird anschließend zumindest ein Reinigungselementträger und/oder zumindest ein Reinigungselement des Zahnbürstenkopfes mithilfe der additiven Fertigungsvorrichtung additiv hergestellt, insbesondere 3D-gedruckt. Der Zahnbürstenkopf kann ein Zahnbürstenkopf nach einem der auf einen solchen gerichteten Ansprüche sein. Als additive Fertigungsvorrichtung kann beispielsweise ein 3D-Drucker verwendet werden.

Mit dem vorgeschlagenen Verfahren können somit Zahnbürstenköpfe ohne großen maschinellen Aufwand schnell und einfach gemäß den individuellen Wünschen und/oder Anforderungen eines Benutzers hergestellt werden.

Bei einer Ausführungsform des Verfahrens ist vorgesehen, dass die Produktionsdaten mit einer Datenverarbeitungsvorrichtung, insbesondere einer Datenverarbeitungsvorrichtung der additiven Fertigungsvorrichtung, aus anatomischen Daten des Benutzers abgeleitet werden. Die anatomischen Daten eines Benutzers können somit die Grundlage für die Produktionsdaten zur Herstellung eines benutzerindividualisierten Zahnbürstenkopfes bilden. Auf diese Weise kann ein Zahnbürstenkopf nach den Wünschen und/oder Anforderungen eines Benutzers maßangefertigt hergestellt werden. Die anatomischen Daten des Benutzers können beispielsweise gebissanatomische Daten des Benutzers sein. Derartige anatomische Daten lassen sich beispielsweise durch Gebissabdruck des Benutzers gewinnen. Werden die benutzerindividualisierten Produktionsdaten aus gebissanatomischen Daten des Benutzers abgeleitet, ist es möglich, einen maßangefertigten Zahnbürstenkopf bereitzustellen, der anatomische Besonderheiten eines Benutzers berücksichtigt und zum Beispiel eine optimierte Reinigung der Zähne des Benutzers unter Berücksichtigung der anatomischen Besonderheiten des Benutzers begünstigt.

Bei einer Ausführungsform des Verfahrens werden anatomische Daten, insbesondere gebissanatomische Daten, eines Benutzers mit einer Datenerfassungsvorrichtung, beispielsweise mit einem Scanner erfasst. Die Datenerfassungsvorrichtung kann beispielsweise Teil der additiven Fertigungsvorrichtung und/oder mit dieser verbunden sein. Die Datenerfassungsvorrichtung kann beispielsweise einen Gebissabdruck eines Benutzers erfassen, insbesondere vermessen, um die gebissanatomischen Daten des Benutzers zu gewinnen. Aus den erfassten gebissanatomischen Daten kann dann mittels der bereits zuvor erwähnten Datenverarbeitungsvorrichtung ein Satz an benutzerindividualisierten Produktionsdaten abgeleitet werden, mit denen dann ein benutzerindividualisierter Zahnbürstenkopf gefertigt werden kann.

Dabei kann vorgesehen sein, eine Geometrie und/oder eine Anordnung von Reinigungselementen und/oder eine Geometrie des Reinigungselementträgers an die Anatomie, insbesondere an die Gebissanatomie eines Benutzers anzupassen.

Bei einer Ausführungsform des Verfahrens ist vorgesehen, dass Produktionsdaten aus einer Datenbank als benutzerindividualisierte Produktionsdaten verwendet werden. Somit kann der Benutzer, der einen individualisierten Zahnbürstenkopf und/oder eine individualisierte Zahnbürste haben möchte, beispielsweise aus einem Formenschatz an Zahnbürstenköpfen und Zahnbürsten dasjenige Modell eines Zahnbürstenkopfes oder einer Zahnbürste auswählen, das seinen Anforderungen am meisten entspricht. Die in der Datenbank hinterlegten Produktionsdaten zu dem ausgewählten Modell können dann als benutzerindividualisierte Produktionsdaten zur Herstellung eines Zahnbürstenkopfes und/oder einer Zahnbürste verwendet werden.

Bei einer Ausführungsform des Verfahrens ist vorgesehen, dass aus einer Datenbank anatomische Daten, insbesondere gebissanatomische Daten, ausgewählt werden, die zu einer Gebissanatomie eines Benutzers passen, um aus diesen, insbesondere mit einer oder der Datenverarbeitungsvorrichtung, benutzerindividualisierte Produktionsdaten abzuleiten und anschließend zumindest einen Reinigungselementträger und/oder zumindest ein Reinigungselement des Zahnbürstenkopfes in Abhängigkeit der benutzerindividualisierten Produktionsdaten mithilfe der additiven Fertigungsvorrichtung additiv herzustellen.

Bei einer weiteren Ausführungsform des Verfahrens ist vorgesehen, dass aus einer Datenbank Produktionsdaten, die zu einer Gebissanatomie des Benutzers passen, als benutzerindividualisierte Produktionsdaten ausgewählt und an eine oder die Datenverarbeitungsvorrichtung und/oder an eine oder die Steuervorrichtung der additiven Fertigungsvorrichtung übertragen werden, um zumindest einen Reinigungselementträger und/oder zumindest ein Reinigungselement des Zahnbürstenkopfes in Abhängigkeit der benutzerindividualisierten Produktionsdaten mithilfe der additiven Fertigungsvorrichtung additiv herzustellen.

Bei einer Ausführungsform des Verfahrens wird ein Reinigungselementträger des Zahnbürstenkopfes an zumindest ein bereitgehaltenes Reinigungselement additiv angeformt, insbesondere durch 3D-Druck angeformt. Auf diese Weise können beispielsweise konventionelle Reinigungselemente, wie beispielsweise aus Borstenfilamenten bestehende Borstenbündel mit einem additiv an die bereitgehaltenen Reinigungselemente angeformten und dabei individualisierbaren Reinigungselementträger verbunden werden. Der Reinigungselementträger kann hierbei beispielsweise mit einer Befestigungsschnittstelle versehen werden, wie sie zuvor bereits erläutert wurde und mit der der Reinigungselementträger an einem Zahnbürstengriff einer Zahnbürste befestigt werden kann.

Das zumindest eine Reinigungselement kann bei einer Ausführungsform des Verfahrens an einen bereitgehaltenen Reinigungselementträger additiv angeformt werden. Dies kann insbesondere durch 3D-Druck geschehen. Auf diese Weise ist es möglich, einen beispielsweise im Spritzguss hergestellten Reinigungselementträger mit zumindest einem additiv an diesen angeformten Reinigungselement, beispielsweise mit einem Borstenfilament oder mit einem aus mehreren Borstenfilamenten bestehenden Borstenbündel, zu versehen.

Zur Lösung der Aufgabe wird auch ein Verfahren zur Herstellung einer Zahnbürste vorgeschlagen, das die Mittel und Merkmale des unabhängigen, auf ein derartiges Verfahren gerichteten Anspruchs aufweist. Zur Lösung der Aufgabe wird somit insbesondere ein Verfahren zur Herstellung einer Zahnbürste vorgeschlagen, bei dem zumindest ein Zahnbürstengriff der Zahnbürste mithilfe einer additiven Fertigungsvorrichtung, insbesondere in Abhängigkeit benutzerindividualisierter Produktionsdaten, additiv hergestellt, insbesondere 3D-gedruck wird. Das Verfahren erlaubt somit eine vergleichsweise einfache Benutzerindividualisierung eines Zahnbürstengriffes einer Zahnbürste.

Bei einer Ausführungsform des Verfahrens ist vorgesehen, dass ein Zahnbürstenkopf der Zahnbürste nach dem Verfahren zur Herstellung eines solchen Zahnbürstenkopfes hergestellt wird, wie es in einem der der auf ein solches gerichteten Ansprüche beansprucht wird. Dabei kann der Zahnbürstengriff an den Zahnbürstenkopf oder der Zahnbürstenkopf an den Zahnbürstengriff angeformt werden. Somit ist es möglich, eine Zahnbürste bereitzustellen, die einen additiv gefertigten Zahnbürstenkopf und einen additiv gefertigten Zahnbürstengriff aufweist. Der Zahnbürstenkopf wie auch der Zahnbürstengriff können dabei beispielsweise an eine Anatomie, insbesondere an eine Gebissanatomie des Benutzers der Zahnbürste individuell angepasst werden. Auch hinsichtlich ihres Designs erlaubt das vorgeschlagene Verfahren in dieser Variante einen größtmöglichen Gestaltungsspielraum bei der Herstellung des Zahnbürstengriffes und des Zahnbürstenkopfes der Zahnbürste.

Der Zahnbürstengriff und der Zahnbürstenkopf können aus unterschiedlichen Materialien hergestellt werden, auch und insbesondere dann, wenn sie jeweils additiv hergestellt, insbesondere 3D-gedruckt werden.

Somit können also sowohl der Zahnbürstengriff als auch der Zahnbürstenkopf additiv hergestellt werden/sein. Der Zahnbürstengriff und der Zahnbürstenkopf können separat hergestellt, insbesondere 3D-gedruckt, und dann lösbar miteinander verbunden werden. So wird eine Zahnbürste geschaffen, die insgesamt additiv hergestellt, insbesondere 3D-gedruckt ist, deren Zahnbürstengriff und Zahnbürstenkopf jedoch zerstörungsfrei und/oder reversibel voneinander lösbar sind. Auf dieses Weise kann der additiv hergestellte Zahnbürstenkopf als Wechselkopf ausgebildet sein und nach seinem Verbrauch gegen einen neuen Zahnbürstenkopf an dem Zahnbürstengriff ersetzt werden.

Der Zahnbürstenkopf kann bei seiner additiven Herstellung aber auch fest mit dem, vorzugsweise ebenfalls additiv hergestellten, Zahnbürstenkörper verbunden werden. Dabei können der Zahnbürstenkopf und der Zahnbürstenkörper aus unterschiedlichen Materialien bestehen, jedoch zerstörungsfrei untrennbar miteinander verbunden sein.

Bei einer Ausführungsform des Verfahrens ist vorgesehen, dass zumindest ein, vorzugsweise elektrisches und/oder elektronisches, Funktionsteil der Zahnbürste mittels additivem Materialauftrag mit dem Zahnbürstengriff und/oder mit dem Zahnbürstenkopf der Zahnbürste verbunden wird. Hierbei kann das Material des Zahnbürstengriffs und/oder das Material des Zahnbürstenkopfes additiv um das bereitgehaltene Funktionsteil der Zahnbürste herum aufgetragen werden. Als Funktionsteil kann beispielsweise ein Motor, ein Vibrator, ein vorzugsweise drahtloses Kommunikationsmodul und/oder auch ein Sensor dienen. Der Sensor kann hierbei beispielsweise ein Drucksensor sein, mit dem ein Anpressdruck, mit dem der Benutzer den Zahnbürstenkopf der Zahnbürste bei der Mund- und Zahnreinigung anpresst, erfasst werden. Über ein vorzugsweise drahtloses Kommunikationsmodul der Zahnbürste lässt sich ein Signal, das den mit dem Sensor erfassten Druck repräsentiert, an ein Empfangsgerät übertragen und von diesem für den Benutzer der Zahnbürste ausgeben. So kann beispielsweise ein Signal ausgegeben werden, wenn der von dem Benutzer über den Zahnbürstenkopf auf die zu reinigende Mundpartie, beispielsweise einen Zahn und/oder das Zahnfleisch, aufgebrachte Druck einen Grenzwert erreicht oder überschreitet.

Mithilfe eines Motors kann der Zahnbürstenkopf und/oder zumindest ein Reinigungselement des Zahnbürstenkopfes der Zahnbürste in Bewegung versetzt werden. Auch ist dies mithilfe eines Vibrators möglich.

Zur Lösung der Aufgabe wird schließlich auch eine additive Fertigungsvorrichtung vorgeschlagen, die die Mittel und Merkmale des unabhängigen, auf eine solche gerichteten Anspruchs aufweist. Zur Lösung der Aufgabe wird somit eine additive Fertigungsvorrichtung vorgeschlagen, die zur Herstellung eines Zahnbürstenkopfes und/oder einer Zahnbürste nach einem Verfahren gemäß zumindest einem der auf solche Verfahren gerichteten Ansprüche eingerichtet ist.

Die additiver Fertigungsvorrichtung kann beispielsweise eine 3D-Druckvorrichtung aufweisen. Zur Herstellung einer Zahnbürste und/oder eines Zahnbürstenkopfes ist die 3D-Druckvorrichtung vorzugsweise zur Verarbeitung von Kunststoff eingerichtet.

Die additive Fertigungsvorrichtung kann eine Datenerfassungsvorrichtung, beispielsweise mit einem Scanner, zur Erfassung anatomischer Daten, insbesondere gebissanatomischer Daten, eines Benutzers aufweisen und/oder zumindest mittelbar mit einer solchen verbunden sein. Ferner kann die additive Fertigungsvorrichtung eine Datenverarbeitungsvorrichtung aufweisen oder mit einer solchen verbunden sein, die zur Ableitung benutzerindividualisierter Produktionsdaten aus anatomischen Daten, insbesondere aus gebissanatomischen Daten eines Benutzers eingerichtet ist. Auf diese Weise ist es möglich, der additiven Fertigungsvorrichtung anatomische Daten eines Benutzers vorzugeben. Die vorgegebenen anatomischen Daten können dann von der Datenverarbeitungsvorrichtung in benutzerindividualisierte Produktionsdaten umgesetzt und zur benutzerindividualisierten Herstellung eines Zahnbürstenkopfes, eines Zahnbürstengriffs und/oder einer Zahnbürste verwendet werden.

Ferner kann die additive Fertigungsvorrichtung eine Steuervorrichtung aufweist oder mit einer solchen verbunden sein, die dazu eingerichtet ist, benutzerindividualisierte Produktionsdaten in Steuersignale zur benutzerindividualisierten Herstellung eines Zahnbürstenkopfes und/oder eines Zahnbürstengriffs und/oder einer Zahnbürste umzusetzen. Mit der Steuervorrichtung kann die Ansteuerung der zuvor erwähnten 3D-Druckvorrichtung erfolgen, um benutzerindividualisierte Zahnbürstenköpfe, Zahnbürstengriffe und/ohne komplette Zahnbürsten herzustellen.

An dieser Stelle sein erwähnt, dass benutzerindividualisierte Produktionsdaten auch solche Produktionsdaten sein oder umfassen können, die eine von einem Benutzer gewünschte Gestaltung der Zahnbürste, insbesondere des Zahnbürstengriffs, des Zahnbürstenkopfes, des Reinigungselementträgers und/oder des zumindest einen Reinigungselements repräsentieren. Produktionsparameter können hierbei unter anderem die Farbe, die Form, das Material, die Beschaffenheit und/oder die Abmessungen der zuvor genannten Elemente sein.

Zur Lösung der Aufgabe wird schließlich auch ein Computerprogramm vorgeschlagen, das die Merkmale des unabhängigen, auf ein Computerprogramm gerichteten Anspruchs aufweist. Demgemäß weist das Computerprogramm Befehle auf, die bewirken, dass die additive Fertigungsvorrichtung nach einem der auf eine solche gerichteten Ansprüche die Verfahrensschritte nach zumindest einem der auf ein Verfahren zur Herstellung eines Zahnbürstenkopfes und/oder auf ein Verfahren zur Herstellung einer Zahnbürste gerichteten Verfahrensansprüche ausführt. Das Computerprogramm kann hierbei auf einem computerlesbaren Medium abgespeichert sein. Als computerlesbares Medium kann auch eine Datenbank dienen.

Die Erfindung wird nun anhand von Ausführungsbeispielen näher beschriebenen. Die Erfindung ist nicht auf die gezeigten Ausführungsbeispiel beschränkt. Weitere Ausführungsbeispiele der Erfindung ergeben sich durch Kombination der Merkmale einzelner oder mehrerer Ansprüche untereinander und/oder in Kombination einzelner oder mehrerer Merkmale der gezeigten Ausführungsbeispiele.

Es zeigen in teilweise stark schematisierter Darstellung:
Fig. 1 eine perspektivische Darstellung einer ersten Ausführungsform einer Zahnbürste, umfassend einen Zahnbürstenkopf und einen Zahnbürstengriff, wobei der Zahnbürstengriff einen Befestigungszapfen und der Zahnbürstenkopf eine dazu passende Zapfenaufnahme aufweisen, mit denen der Zahnbürstenkopf und der Zahnbürstengriff lösbar miteinander verbindbar sind,
Fig. 2 die Zahnbürste aus Figur 1 mit auf den Befestigungszapfen des Zahnbürstengriffs aufgeschobenem Zahnbürstenkopf,
Fig. 3 die Zahnbürste aus den Figuren 1 und 2 mit dem an dem Zahnbürstengriff in Befestigungsstellung befindlichen Zahnbürstenkopf,
Fig. 4 eine teilgeschnittene Seitenansicht der Zahnbürste aus den Figuren 1 bis 3,
Fig. 5 die mit dem Kreis in Figur 4 markierte Einzelheit in vergrößerter Darstellung,
Fig. 6 eine perspektivische Einzelteildarstellung des Zahnbürstenkopfes der in den vorherigen Figuren abgebildeten Zahnbürste,
Fig. 7 eine perspektivische Darstellung eines Zahnbürstenkopfes und eines Zahnbürstengriffs einer Zahnbürste gemäß einer weiteren Ausführungsform, wobei der Zahnbürstengriff eine Aufnahme zum Einführen des Zahnbürstenkopfes aufweist,
Fig. 8 eine perspektivische Darstellung der Zahnbürste aus Figur 7 mit dem teilweise in die Aufnahme des Zahnbürstengriffs eingeführten Zahnbürstenkopf,
Fig. 9 eine perspektivische Darstellung der Zahnbürste aus den Figuren 7 und 8 mit dem in die Aufnahme des Zahnbürstengriffs positionierten Zahnbürstenkopf,
Fig. 10 die mit dem Kreis in Figur 7 markierte Einzelheit in vergrößerter Darstellung, sowie
Fig. 11 eine Abfolge von Piktogrammen zur Veranschaulichung eines Verfahrens zur Herstellung eines Zahnbürstenkopfes und/oder einer Zahnbürste, wie sie in den Figuren 1 bis 10 zumindest teilweise gezeigt sind.

Bei der nachfolgenden Beschreibung verschiedener Ausführungsformen der Erfindung erhalten in ihrer Funktion übereinstimmende Elemente auch bei abweichender Gestaltung oder Formgebung übereinstimmende Bezugszahlen.

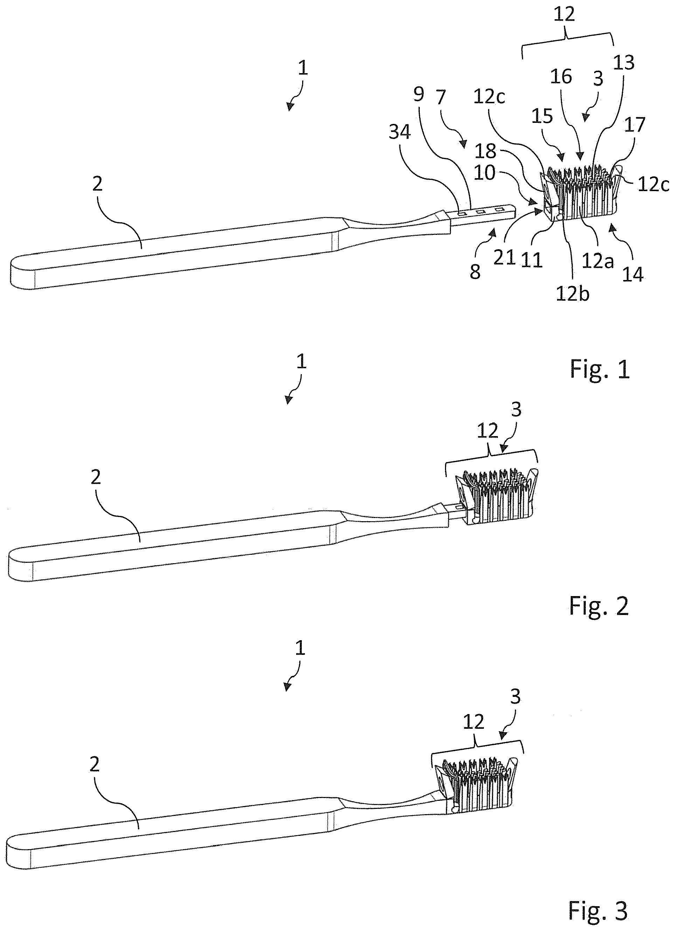

Die Figuren 1 bis 10 zeigen zumindest Teile von im Ganzen mit 1 bezeichneten Zahnbürsten. Die gezeigten Zahnbürsten 1 weisen jeweils einen Zahnbürstengriff 2 und einen mit dem Zahnbürstengriff 2 verbindbaren bzw. verbundenen Zahnbürstenkopf 3 auf.

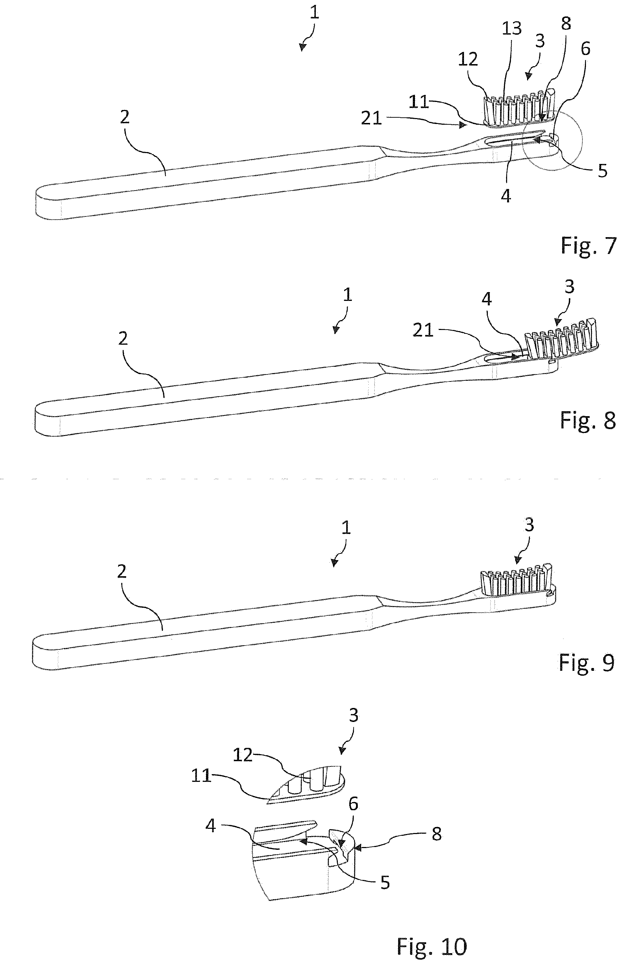

Die Figuren 1 bis 6 zeigen eine erste Ausführungsform einer Zahnbürste 1 mit ihrem Zahnbürstengriff 2 und ihrem Zahnbürstenkopf 3. Die Figuren 7 bis 10 zeigen eine zweite Ausführungsform einer Zahnbürste 1, die ebenfalls einen Zahnbürstengriff 2 und einen Zahnbürstenkopf 3 aufweist.

Bei beiden Ausführungsformen der Zahnbürste 1 sind der Zahnbürstengriff 2 und der Zahnbürstenkopf 3 lösbar miteinander verbunden. Bei dem in den Figuren 7 bis 10 gezeigten Ausführungsbeispiel weist der Zahnbürstengriff 2 eine Aufnahme 4 zum Einsetzen des Bürstenkopfes 3 auf. Die Aufnahme 4 umfasst eine Einführungsnut 5 und eine Einrastnut 6, die zur Festlegung des Zahnbürstenkopfes 3 in der Aufnahme 4 des Zahnbürstengriffes 2 dient.

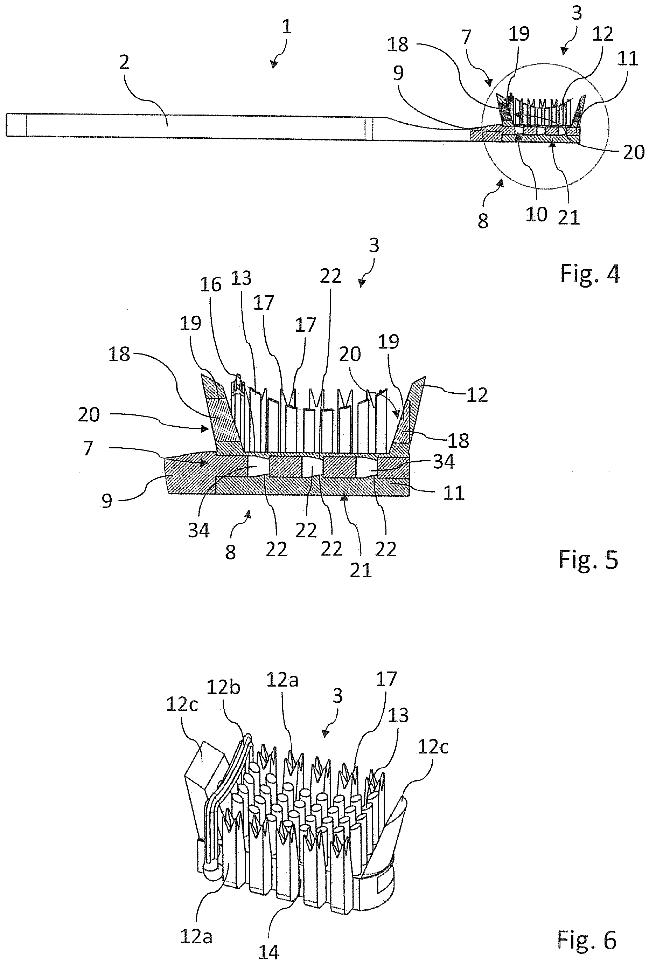

Bei der in den Figuren 1 bis 6 dargestellten Zahnbürste 1 sind zwischen dem Zahnbürstengriff 2 und dem Zahnbürstenkopf 3 eine Steckverbindung 7 und eine Rastverbindung 8 ausgebildet, mit denen der Zahnbürstenkopf 3 sicher mit dem Zahnbürstengriff 2 dieser Zahnbürste 1 verbindbar ist. Der Zahnbürstengriff 2 der in den Figuren 1 bis 6 zumindest in Teilen dargestellten Zahnbürste 1 weist einen Befestigungszapfen 9 auf, auf den der Zahnbürstenkopf 3 mit seiner dazu passenden Zapfenaufnahme 10 aufgesteckt werden kann. Die Position des Befestigungszapfens 9 in der Zapfenaufnahme 10 des Zahnbürstenkopfes 3 ist besonders gut in den Schnittdarstellungen gemäß den Figuren 4 und 5 zu erkennen.

Die Figuren 4 und 5 zeigen dabei auch die Rastverbindung 8, die zwischen dem Zahnbürstengriff 2 und dem Zahnbürstenkopf 3, genauer gesagt zwischen dem Befestigungszapfen 9 des Zahnbürstengriffs 2 und der Zapfenaufnahme 10 des Zahnbürstenkopfs 3 ausgebildet ist.

Bei allen in den Figuren gezeigten Zahnbürsten 1 sind die Zahnbürstengriffe 2 aus einem biologisch abbaubaren Material hergestellt. Als biologisch-abbaubares Material dient bei den gezeigten Zahnbürsten 1 ein biologisch-abbaubarer Kunststoff. Die Verwendung anderer biologisch-abbaubarer Materialien, beispielsweise Holz oder auch Holzwerkstoffe, ist natürlich möglich.

Bei einer in den Figuren nicht gezeigten Ausführungsform der Zahnbürste 1 weist diese in ihrem Zahnbürstengriff 2 und/oder in ihrem Zahnbürstenkopf 3 zumindest ein Funktionsteil auf. Als Funktionsteil kann beispielsweise ein Motor, ein Vibrator, ein vorzugsweise drahtloses Kommunikationsmodul und/oder ein Sensor verwendet werden. Der mögliche Nutzen eines vorzugsweise elektrischen/elektronischen Funktionsteils wurde bereits im allgemeinen Beschreibungsteil weiter oben erläutert.

Bei beiden in den Figuren gezeigten Zahnbürsten 1 sind Zahnbürstengriffe 2 jeweils additiv hergestellt, insbesondere 3D-gedruckt.

Wie bereits zuvor erwähnt, weisen beide Zahnbürsten 1 jeweils einen Zahnbürstenkopf 3 auf. Jeder gezeigte Zahnbürstenkopf 3 umfasst einen Reinigungselementträger 11 und mehrere an dem Reinigungselementträger 11 angeordnete Reinigungselemente 12. Bei den in den Figuren gezeigten Zahnbürstenköpfen 3 sind sowohl der Reinigungselementträger 11 als auch die Reinigungselemente 12 additiv hergestellt, insbesondere 3D-gedruckt.

Beide Zahnbürstenköpfe 3 weisen mehrere unterschiedliche Reinigungselemente 12, 12a, 12b, 12c auf. Einige der Reinigungselemente 12 bestehen aus additiv hergestellten, insbesondere 3D-gedruckten Borstenfilamenten 13. Der in den Figuren 1 bis 6 dargestellte Zahnbürstenkopf 3 umfasst darüber hinaus mehrere Reinigungselemente 12a, die seitlich an den Reinigungselementträger 11 angebracht, nämlich additiv angeformt, insbesondere 3D-aufgedruckt, sind.

Gemäß Figur 6 weist der Zahnbürstenkopf 3 ferner ein additiv hergestelltes, vorzugsweise 3D-gedrucktes bogenförmiges Reinigungselement 12b auf, das zwei unterschiedliche, nämlich einander abgewandte Seitenflächen 14 und 15 des Reinigungselementträgers 11, miteinander verbindet und dabei eine Vorderseite 16 des Reinigungselementträgers 11 überspannt. Die Seitenflächen des Reinigungselementträgers 11 sind dabei die Flächen, die quer zu der Vorderseite 16 des Reinigungselementträgers 11 ausgerichtet sind.

Die seitlich an den Reinigungselementträger 11 angebrachten Reinigungselemente 12a lassen sich zur Reinigung von Mundpartien verwenden, die sich bei Verwendung der Zahnbürste 1 seitlich benachbart zum Zahnbürstenkopf 3 befinden, wenn die freie Enden anderer Reinigungselemente 12 in Anlage an Zähne und Zahnfleisch eines Benutzers 27 gebracht werden.

Gemäß Figur 6 weist der Zahnbürstenkopf 3 der in den Figuren 1 bis 6 dargestellten Zahnbürste 1 an jeder der zuvor erwähnten Seitenflächen 14 und 15 jeweils eine Reihe von additiv hergestellten, insbesondere 3D-gedruckten seitlichen Reinigungselementen 12a auf, die an ihren freien Enden jeweils vier vorstehende Reinigungssegmente 17 aufweisen. Jedes der Reinigungssegmente 17 hat einen kleineren Querschnitt als das sie tragende Reinigungselement 12a im an die Reinigungssegmente 17 angrenzenden Abschnitt. Somit eignen sich die Reinigungssegmente 17 aufgrund ihrer vergleichsweisen schlanken Gestalt beispielsweise zur Zahnzwischenraumreinigung.

Die Schnittdarstellung des Zahnbürstenkopfes 3 gemäß Figur 5 zeigt, dass die beiden äußeren Reinigungselemente 12c an einem distalen und einem proximalen Ende des Zahnbürstenkopfes 3 jeweils einen Hohlraum 18 zur Aufnahme einer Substanz, hier eines Reinigungsmittels 19, und eine Austrittsöffnung 20 aus dem Hohlraum 18 zur Abgabe der Substanz aufweisen. Die in den Figuren gezeigten Reinigungselemente 12, 12a, 12b, 12c sind durch additiven Materialauftrag auf dem jeweiligen Reinigungselementträger 11 aufgebaut. Bei einer in den Figuren nicht dargestellten Ausführungsform eines Zahnbürstenkopfes ist vorgesehen, dass der Reinigungselementträger dieses Zahnbürstenkopfes zumindest ein Aufnahmeloch für ein Reinigungselement aufweist, welches Aufnahmeloch durch additiven Materialauftrag, insbesondere durch 3D-Druck hergestellt ist.

Beide Zahnbürstenköpfe 3 weisen an ihren Reinigungselementträgern 11 jeweils eine Befestigungsschnittstelle 21 zur lösbaren Befestigung des Zahnbürstenkopfes 3 an einem Zahnbürstengriff 2 auf.

Die Befestigungsschnittstelle 21 des in den Figuren 1 bis 6 dargestellten Zahnbürstenkopfes 3 umfasst mehrere Rastelemente 22, die bei an dem Zahnbürstengriff 2 befestigtem Zahnbürstenkopf 2 Teil der bereits zuvor erwähnten Rastverbindung 8 sind. Die Rastelemente 22 sind innerhalb der Zapfenaufnahme 10 des Reinigungselementträgers 11 als Rastvorsprünge ausgebildet. Die Rastvorsprünge greifen in Rastöffnungen 34 ein, die an dem Befestigungszapfen 9 des Zahnbürstengriffs 2 ausgebildet sind, wenn der Zahnbürstenkopf 3 gemäß den Figuren 3, 4 und 5 auf den Befestigungszapfen 9 des Zahnbürstengriffs 2 aufgesteckt ist.

Die in den Figuren 1 bis 6 sowie 7 bis 10 dargestellten Zahnbürstenköpfe 3 lassen sich gemäß dem nachfolgend beschriebenen Verfahren benutzerindividualisiert herstellen.

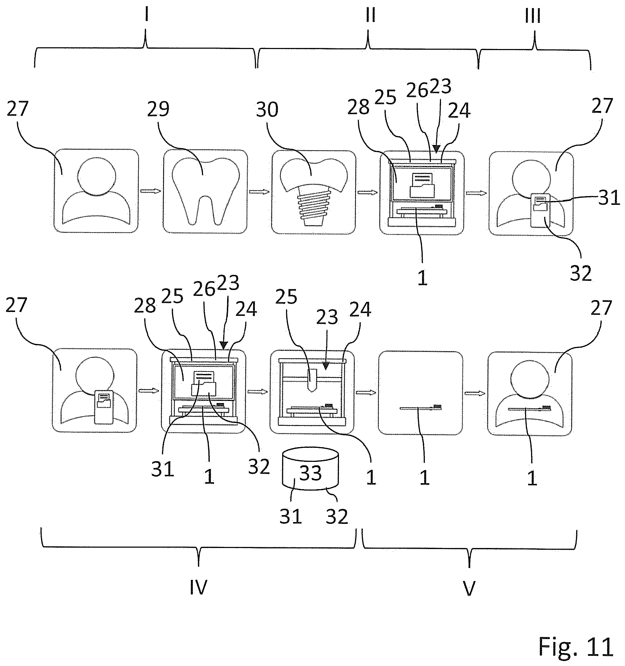

Demnach ist vorgesehen, dass benutzerindividualisierte Produktionsdaten an eine Steuervorrichtung 23 einer additiven Fertigungsvorrichtung 24 übertragen werden. Die additive Fertigungsvorrichtung 24 umfasst eine 3D-Druckvorrichtung 25 und ist in Figur 11 stark schematisiert den Piktogramm-Reihen der Figur 11 dargestellt. In Abhängigkeit der benutzerindividualisierten Produktionsdaten werden dann ein Reinigungselementträger 11 und zumindest ein Reinigungselement 12, 12a, 12b, 12c des Zahnbürstenkopfes 3 mithilfe der additiven Fertigungsvorrichtung 24 additiv hergestellt.

Die Produktionsdaten werden mit einer Datenverarbeitungsvorrichtung 26, die Teil der additiven Fertigungsvorrichtung 24 oder dieser zumindest zeitweise zugeordnet ist, aus anatomischen Daten des Benutzers 27 abgeleitet. Die anatomischen Daten des Benutzers 27 können dabei gebissanatomische Daten des Benutzers 27 sein.

Die anatomischen Daten des Benutzers 27 werden mit einer Datenerfassungseinrichtung 28 erfasst. Die Datenerfassungsvorrichtung 28 kann beispielsweise zu diesem Zweck einen Scanner aufweisen, mit dem ein Gebissabdruck des Benutzers 27 erfasst, insbesondere vermessen werden kann, um die gebissanatomischen Daten des Benutzers 27 für die weitere Datenverarbeitung zu gewinnen. Die Datenerfassungsvorrichtung 28 kann zumindest zeitweise der additiven Fertigungsvorrichtung 24 zeitweise zugeordnet oder zumindest zeitweise Teil der additiven Fertigungsvorrichtung 24 sein.

Grundsätzlich ist es auch möglich, Datensätze, beispielsweise gebissanatomische Datensätze in einer Datenbank 33 zur Auswahl bereit zu halten. Auf diese Datenbank 33 kann die additive Fertigungsvorrichtung 24 insbesondere über ihre Steuervorrichtung 32 zumindest zeitweise Zugriff nehmen, um die Datensätze zu erhalten und/oder auszulesen. So ist es möglich, einen möglichst passenden gebissanatomischen Datensatz für die benutzerindividualisierte Herstellung des Zahnbürstenkopfes 3 zu verwenden, ohne eine individuelle Erfassung der Gebissanatomie des Benutzers 27 vorzunehmen.

Die Datenbank 33 kann ferner Datensätze mit Produktionsdaten enthalten, die als benutzerindividualisierte Produktionsdaten verwendet werden können. Die Produktionsdaten können unterschiedliche Modelle von Zahnbürstenköpfen und/oder Zahnbürsten repräsentieren. Aus den in der Datenbank 33 enthaltenen Produktionsdaten kann der Benutzer 27 die passenden Produktionsdaten wählen, um einen Zahnbürstengriff 2, einen Zahnbürstenkopf 3 oder eine gesamte Zahnbürste 1 nach seinen individuellen Vorstellungen herzustellen.

Durch die benutzerindividualisierte Herstellung ist es möglich, eine Geometrie und/oder eine Anordnung von Reinigungselementen 12, 12a, 12b, 12c und/oder eine Geometrie des Reinigungselementträgers 11 an eine Anatomie, insbesondere an eine Gebissanatomie, des Benutzers 27 anzupassen. Dies ermöglicht eine optimierte Nutzung der mit dem Zahnbürstenkopf 3 ausgestatteten Zahnbürste 1.

Bei einer Ausführungsform des Verfahrens ist vorgesehen, den Reinigungselementträger 11 des Zahnbürstenkopfes 3 an ein bereitgehaltenes Reinigungselement 12 anzuformen. Dies kann vorzugsweise durch 3D-Druck geschehen.

Bei einer Ausführungsform des Verfahrens ist vorgesehen, zumindest ein Reinigungselement 12 an einen bereitgehaltenen Reinigungselementträger 11 additiv anzuformen. Auch dies kann beispielsweise durch 3D-Druck geschehen.

Zur Herstellung einer gesamten Zahnbürste 1 ist verfahrensmäßig vorgesehen, dass zumindest der Zahnbürstengriff 2 der Zahnbürste 1 mithilfe der zuvor bereits erwähnten additiven Fertigungsvorrichtung 24 vorzugsweise in Abhängigkeit benutzerindividualisierter Produktionsdaten additiv hergestellt, insbesondere 3D-gedruckt wird.

Um eine vollständige Benutzerindividualisierung auch der Zahnbürste 1 zu gestatten, ist es zweckmäßig, den Zahnbürstenkopf 3 der Zahnbürste 1 nach dem zuvor bereits erläuterten Verfahren benutzerindividualisiert herzustellen. Dabei kann der Zahnbürstengriff 2 an den Zahnbürstenkopf 3 angeformt werden. Es ist auch möglich, den Zahnbürstenkopf 3 bei seiner additiven Fertigung an den Zahnbürstengriff 2 anzuformen.

Bei Bedarf ist es auch möglich, zumindest ein, vorzugweise elektrisches und/oder elektronisches, Funktionsteil mittels additivem Materialauftrag mit dem Zahnbürstengriff 2 und/oder mit dem Zahnbürstenkopf 3 zu verbinden. Hierbei kann ein vorzugsweise elektrisches und/oder elektronisches Funktionsteil bereitgehalten und dann bei der additiven Herstellung des Zahnbürstengriffs 2 und/oder bei der additiven Herstellung des Zahnbürstenkopfes 3 mit Material umgeben und dabei von dem Zahnbürstengriff 2 und/oder von dem Zahnbürstenkopf 3 eingehaust werden. Als elektrisches und/oder elektronisches Funktionsteil kann beispielsweise ein Motor, ein Vibrator, ein vorzugsweise drahtloses Kommunikationsmodul und/oder ein Sensor dienen.

Die zuvor erläuterten Verfahren können auf der bereits zuvor erwähnten additiven Fertigungsvorrichtung 24 durchgeführt werden. Die additive Fertigungsvorrichtung 24 ist hierbei sowohl zur Herstellung der bereits zuvor ausführlich erläuterten Zahnbürstenköpfe 3 als auch zur Herstellung der gesamten Zahnbürste 1 eingerichtet, die dann den Zahnbürstenkopf 3 und einen Zahnbürstengriff 2 umfasst.

Der additiven Fertigungsvorrichtung 24 können die bereits zuvor erwähnte Datenerfassungsvorrichtung 28, die zuvor bereits erwähnte Datenverarbeitungsvorrichtung 26 und auch die zuvor bereits erwähnte Steuervorrichtung 23 zumindest zeitweise zugeordnet sein. Die Steuervorrichtung 23 ist dazu eingerichtet, benutzerindividualisierte Produktionsdaten in Steuersignale zur benutzerindividualisierten Herstellung des Zahnbürstenkopfes 3 bzw. des Zahnbürstengriffs 2 und/oder auch der gesamten Zahnbürste 1 umzusetzen.

Anhand der Abfolge von Piktogrammen aus Figur 11 lässt ein Anwendungsfall des zuvor erläuterten Verfahrens wie folgt beschreiben:
Ein Benutzer 27 geht zu einem Zahnarzt 29, um einen Abdruck seines Gebisses anfertigen zu lassen (Schritt I). Der Abdruck des Gebisses wird von einem Dentallabor 30 mit einer Datenerfassungsvorrichtung 28 erfasst und vermessen (Schritt II). Dabei werden benutzerindividualisierte Produktionsdaten erzeugt, die dem Benutzer zur weiteren Verwendung zur Verfügung gestellt werden (Schritt III). Die benutzerindividualisierten Produktionsdaten und/oder die anatomischen, insbesondere die gebissanatomischen Daten können auf einem computerlesbaren Medium 32, beispielsweise auf einem Datenspeicher, gespeichert und das computerlesbare Medium 32 dem Benutzer 27 übergeben werden. Der Benutzer 27 kann die ihm überlassenen benutzerindividualisierten Produktionsdaten und/oder die anatomischen Daten dazu verwenden, eine benutzerindividualisierte Zahnbürste 1, die dann einen benutzerindividualisierten Zahnbürstenkopf 3 und/oder einen benutzerindividualisierten Zahnbürstengriff 2 aufweist, mithilfe einer additiven Fertigungsvorrichtung 24 additiv herzustellen (Schritt IV in Figur 11). Ergebnis dieses Verfahrens ist eine an die Gebissanatomie des Benutzers 27 individualisierte Zahnbürste 1, die von ihm benutzt werden kann (Schritt V in Figur 11).

Die dem Benutzer 27 zur Verfügung gestellten benutzerindividualisierten Produktionsdaten können ihm in Form und/oder als Teil eines Computerprogramms 31 auf einem computerlesbaren Medium 32 zur Verfügung gestellt werden. Das Computerprogramm 31 kann in der bereits zuvor erwähnten Datenbank 33 hinterlegt sein. Das Computerprogramm umfasst Befehle, die bewirken, dass die additive Fertigungsvorrichtung 24 und insbesondere ihre 3D-Druckvorrichtung 25 die erforderlichen Verfahrensschritte zur Herstellung der Zahnbürste 1 bzw. des Zahnbürstenkopfes 3 ausführt. Dabei können die Befehle des Computerprogramms 31 und/oder die benutzerindividualisierten Produktionsdaten von der Steuervorrichtung 23 der additiven Fertigungsvorrichtung 24 in entsprechende Stell- und/oder Steuersignale umgesetzt werden, mit deren Hilfe die additive Fertigungsvorrichtung 24 und insbesondere ihre 3D-Druckvorrichtung 25 mit ihren entsprechenden Aktoren die Zahnbürste 1, den Zahnbürstengriff 2 und/oder den Zahnbürstenkopf 3 herstellen.

Die Erfindung befasst sich mit Verbesserungen auf dem technischen Gebiet der Zahnbürsten. Hierzu wird unter anderem ein Zahnbürstenkopf 3 vorgeschlagen, dessen Reinigungselementträger 11 und/oder zumindest ein Reinigungselement 12, 12a, 12b, 12c des Zahnbürstenkopfes 3 additiv hergestellt ist/sind.

### Bezugszeichenliste

- 1: Zahnbürste
- 2: Zahnbürstengriff
- 3: Zahnbürstenkopf
- 4: Aufnahme für 3
- 5: Einführungsnut
- 6: Einrastnut
- 7: Steckverbindung
- 8: Rastverbindung
- 9: Befestigungszapfen
- 10: Zapfenaufnahme
- 11: Reinigungselementträger
- 12: Reinigungselement
- 12a: seitliches Reinigungselement
- 12b: bogenförmiges Reinigungselement
- 12c: Reinigungselement mit Hohlraum
- 13: Borstenfilament
- 14: Seitenfläche von 11
- 15: Seitenfläche von 11
- 16: Vorderseite von 11
- 17: Reinigungssegmente
- 18: Hohlraum
- 19: Reinigungsmittel
- 20: Austrittsöffnung
- 21: Befestigungsschnittstelle
- 22: Rastelement
- 23: Steuervorrichtung
- 24: additive Fertigungsvorrichtung
- 25: 3D-Druckvorrichtung
- 26: Datenverarbeitungsvorrichtung
- 27: Benutzer
- 28: Datenerfassungsvorrichtung
- 29: Zahnarzt
- 30: Dentallabor
- 31: Computerprogramm
- 32: computerlesbares Medium
- 33: Datenbank
- 34: Rastöffnung in 9

## Patentansprüche

1. Zahnbürstenkopf (3) mit einem Reinigungselementträger (11) und mit zumindest einem an dem Reinigungselementträger (11) angeordneten Reinigungselement (12, 12a, 12b, 12c), wobei der Reinigungselementträger (11) und/oder das zumindest eine Reinigungselement (12, 12a, 12b, 12c) additiv hergestellt, insbesondere 3D-gedruckt ist/sind.

2. Zahnbürstenkopf (3) nach dem vorhergehenden Anspruch, wobei zumindest ein Reinigungselement (12, 12a, 12b, 12c) ein additiv hergestelltes, insbesondere ein 3D-gedrucktes Borstenfilament (13) ist.

3. Zahnbürstenkopf (3) nach einem der vorhergehenden Ansprüche, wobei zumindest eine Reinigungselement (12, 12a, 12b, 12c) seitlich an den Reinigungselementträger (11) angebracht, insbesondere additiv angeformt, insbesondere 3D-aufgedruckt ist.

4. Zahnbürstenkopf (3) nach einem der vorhergehenden Ansprüche, wobei zumindest ein, insbesondere additiv hergestelltes, vorzugsweise 3D-gedrucktes, Reinigungselement (12, 12a, 12b, 12c) zwei unterschiedliche, insbesondere einander abgewandte, Seitenflächen (14,15) des Reinigungselementträgers (11) miteinander verbindet und/oder eine Vorderseite (16) des Reinigungselementträgers (11) überspannt.

5. Zahnbürstenkopf (3) nach einem der vorhergehenden Ansprüche, wobei zumindest ein, insbesondere additiv hergestelltes, vorzugsweise 3D-gedrucktes, Reinigungselement (12, 12a, 12b, 12c) an seinem freien Ende zumindest zwei, vorzugsweise mehrere, Reinigungssegmente (17) aufweist.

6. Zahnbürstenkopf (3) nach einem der vorhergehenden Ansprüche, wobei zumindest ein, insbesondere additiv hergestelltes, vorzugsweise 3D-gedrucktes, Reinigungselement (12, 12a, 12b, 12c) einen Hohlraum (18) zur Aufnahme einer Substanz, insbesondere Reinigungsmittels (19), und eine Austrittsöffnung (20) aus dem Hohlraum (12, 12a, 12b, 12c) zur Abgabe der Substanz aufweist.

7. Zahnbürstenkopf (3) nach einem der vorhergehenden Ansprüche, wobei der Reinigungselementträger (11) zumindest ein Aufnahmeloch für ein Reinigungselement (12, 12a, 12b, 12c) aufweist, welches Aufnahmeloch durch additiven Materialauftrag, insbesondere durch 3D-Druck hergestellt ist.

8. Zahnbürstenkopf (3) nach einem der vorhergehenden Ansprüche, wobei der Zahnbürstenkopf (3), insbesondere an dem Reinigungselementträger (11), eine Befestigungsschnittstelle (21) zur, vorzugsweise lösbaren, Befestigung an einem Zahnbürstengriff (2) aufweist, insbesondere wobei die Befestigungsschnittstelle (21) ein Rastelement (22) einer Rastverbindung (8), einen Befestigungszapfen und/oder eine Zapfenaufnahme (10) ist und/oder umfasst.

9. Zahnbürste (1) mit einem Zahnbürstengriff (2) und einem Zahnbürstenkopf (3) nach einem der vorhergehenden Ansprüche.

10. Zahnbürste (1) nach dem vorhergehenden Anspruch, wobei der Zahnbürstengriff (2) und der Zahnbürstenkopf (3) lösbar miteinander verbindbar oder miteinander verbunden sind.

11. Zahnbürste (1) nach einem der vorhergehenden Ansprüche, wobei der Zahnbürstengriff (2) eine Aufnahme (4) zum Einsetzen des Zahnbürstenkopfes (3) aufweist, insbesondere wobei die Aufnahme (4) eine Einführungsnut (5) und/oder eine Einrastnut (6) zur Festlegung des Zahnbürstenkopfes (3) an dem Zahnbürstengriff (2) aufweist.

12. Zahnbürste (1) nach einem der vorhergehenden Ansprüche, wobei zwischen Zahnbürstengriff (2) und Zahnbürstenkopf (3) eine Steckverbindung (7) und/oder eine Rastverbindung (8) ausgebildet ist, mit der/denen der Zahnbürstenkopf (3) mit dem Zahnbürstengriff (2) verbindbar ist.

13. Zahnbürste (1) nach einem der vorhergehenden Ansprüche, wobei der Zahnbürstengriff (2) einen Befestigungszapfen (9) aufweist, auf den der Zahnbürstenkopf (3) mit seiner dazu passenden Zapfenaufnahme (10) aufsteckbar ist.

14. Zahnbürste (1) nach einem der vorhergehenden Ansprüche, wobei der Zahnbürstengriff (2) aus einem biologisch-abbaubaren Material, insbesondere aus Holz, aus einem Holzwerkstoff und/oder aus einem biologisch-abbaubaren Kunststoff besteht.

15. Zahnbürste (1) nach einem der vorhergehenden Ansprüche, wobei die Zahnbürste (1), insbesondere in und/oder an ihrem Zahnbürstengriff (2) und/oder in oder an ihrem Zahnbürstenkopf (3), zumindest ein, vorzugsweise elektrisches und/oder elektronisches, Funktionsteil aufweist, insbesondere einen Motor, einen Vibrator, ein vorzugsweise drahtloses Kommunikationsmodul und/oder einen Sensor.

16. Zahnbürste (1) nach einem der vorhergehenden Ansprüche, wobei der Zahnbürstenkopf (3) und/oder der Zahnbürstengriff (2) additiv hergestellt, insbesondere 3D-gedruckt ist/sind und/oder aus unterschiedlichen Materialien bestehen.

17. Verfahren zur Herstellung eines für einen Benutzer individualisierten Zahnbürstenkopfes (3), insbesondere eines Zahnbürstenkopfes (3) nach einem der vorhergehenden Ansprüche, wobei benutzerindividualisierte Produktionsdaten an eine Steuervorrichtung (23) einer additiven Fertigungsvorrichtung (24), insbesondere einer 3D-Druckvorrichtung (25), übertragen werden, und wobei zumindest einen Reinigungselementträger (11) und/oder zumindest ein Reinigungselement (12, 12a, 12b, 12c) des Zahnbürstenkopfes (3) in Abhängigkeit der benutzerindividualisierten Produktionsdaten mithilfe der additiven Fertigungsvorrichtung (24) additiv hergestellt, insbesondere 3D-gedruckt wird/werden.

18. Verfahren nach dem vorhergehenden Anspruch, wobei die Produktionsdaten mit einer Datenverarbeitungsvorrichtung (26), insbesondere der additiven Fertigungsvorrichtung (24), aus anatomischen Daten des Benutzers abgeleitet werden, vorzugsweise wobei die anatomischen Daten des Benutzers gebissanatomische Daten des Benutzers (27) sind.

19. Verfahren nach einem der vorhergehenden Ansprüche, wobei anatomische Daten, insbesondere gebissanatomische Daten, eines Benutzers (27) mit einer Datenerfassungsvorrichtung (28), beispielsweise mit einem Scanner, erfasst werden, vorzugsweise wobei ein Gebissabdruck eines Benutzers (27) mit der Datenerfassungsvorrichtung (28) erfasst, insbesondere vermessen wird, um gebissanatomische Daten des Benutzers (27) zu gewinnen.

20. Verfahren nach einem der vorhergehenden Ansprüche, wobei Daten aus einer Datenbank (33) als
benutzerindividualisierte Produktionsdaten verwendet werden.

21. Verfahren nach einem der vorhergehenden Ansprüche, wobei aus anatomischen Daten, vorzugsweise aus gebissanatomischen Daten, die in einer Datenbank (33) gespeichert sind und die zu einer Gebissanatomie eines Benutzers (27) passen, insbesondere mit einer oder der Datenverarbeitungsvorrichtung (28) benutzerindividualisierte Produktionsdaten abgeleitet werden.

22. Verfahren nach einem der vorhergehenden Ansprüche, wobei die benutzerindividualisierten Produktionsdaten an eine oder die Datenverarbeitungsvorrichtung (26) und/oder an eine oder die Steuervorrichtung (23) der additiven Fertigungsvorrichtung (24) übertragen werden, um zumindest einen Reinigungselementträger (11) und/oder zumindest ein Reinigungselement (12, 12a, 12b, 12c) des Zahnbürstenkopfes (3) in Abhängigkeit der benutzerindividualisierten Produktionsdaten mithilfe der additiven Fertigungsvorrichtung (24) additiv herzustellen.

23. Verfahren nach einem der vorhergehenden Ansprüche, wobei eine Geometrie und/oder eine Anordnung von Reinigungselementen (12, 12a, 12b, 12c) und/oder eine Geometrie des Reinigungselementträgers (11) an eine Anatomie, insbesondere an eine Gebissanatomie, des Benutzers (27) angepasst werden.

24. Verfahren nach einem der vorhergehenden Ansprüche, wobei ein Reinigungselementträger (11) des Zahnbürstenkopfes (3) an zumindest ein bereitgehaltenes Reinigungselement (12, 12a, 12b, 12c) additiv angeformt, insbesondere durch 3D-Druck angeformt wird.

25. Verfahren nach einem der vorhergehenden Ansprüche, wobei zumindest ein Reinigungselement (12, 12a, 12b, 12c) an einen bereitgehaltenen Reinigungselementträger (11) additiv angeformt, insbesondere durch 3D-Druck angeformt wird.

26. Verfahren zur Herstellung einer Zahnbürste (1), wobei zumindest ein Zahnbürstengriff (2) der Zahnbürste (1) mithilfe einer additiven Fertigungsvorrichtung (24), insbesondere in Abhängigkeit benutzerindividualisierter Produktionsdaten, additiv hergestellt, insbesondere 3D-gedruckt wird.

27. Verfahren nach dem vorhergehenden Anspruch, wobei ein Zahnbürstenkopf (3) der Zahnbürste (1) nach dem Verfahren zur Herstellung eines Zahnbürstenkopfes (3) nach einem der vorherigen Ansprüche hergestellt wird, insbesondere wobei der Zahnbürstengriff (2) an den Zahnbürstenkopf (3) oder wobei der Zahnbürstenkopf (3) an den Zahnbürstengriff (2) angeformt wird und/oder wobei der Zahnbürstengriff (2) und der Zahnbürstenkopf (3) aus unterschiedlichen Materialien hergestellt werden.

28. Verfahren nach einem der vorhergehenden Ansprüche, wobei zumindest ein, vorzugsweise elektrisches und/oder elektronisches, Funktionsteil, insbesondere ein Motor, ein Vibrator, ein vorzugsweise drahtloses Kommunikationsmodul und/oder ein Sensor, mittels additivem Materialauftrag mit dem Zahnbürstengriff (2) und/oder mit dem Zahnbürstenkopf (3) verbunden wird.

29. Additive Fertigungsvorrichtung (24) eingerichtet zur Herstellung eines Zahnbürstenkopfes (3) und/oder einer Zahnbürste (1) nach einem der vorherigen Ansprüche.

30. Additive Fertigungsvorrichtung (24) nach dem vorherigen Anspruch, wobei die additive Fertigungsvorrichtung (24) eine 3D-Druckvorrichtung (25) aufweist.

31. Additive Fertigungsvorrichtung (24) nach einem der vorherigen Ansprüche, wobei die additive Fertigungsvorrichtung (24) eine Datenerfassungsvorrichtung (28), insbesondere mit einem Scanner, zur Erfassung anatomischer Daten, insbesondere gebissanatomischer Daten, eines Benutzers aufweist oder mit einer solchen zumindest zeitweise verbunden ist.

32. Additive Fertigungsvorrichtung (24) nach einem der vorherigen Ansprüche, wobei die additive Fertigungsvorrichtung (24) eine Datenverarbeitungsvorrichtung (26) zur Ableitung benutzerindividualisierter Produktionsdaten aus anatomischen Daten, insbesondere aus gebissanatomischen Daten eines Benutzers, aufweist oder zumindest zeitweise mit einer solchen verbunden ist, und/oder wobei die additive Fertigungsvorrichtung (24) eine Steuervorrichtung (23) aufweist oder zumindest zeitweise mit einer solchen verbunden ist, die dazu eingerichtet ist, benutzerindividualisierte Produktionsdaten in Steuersignale zur benutzerindividualisierten Herstellung eines Zahnbürstenkopfes (3) und/oder eines Zahnbürstengriffs (2) und/oder einer Zahnbürste (1) umzusetzen.

33. Computerprogramm (31), umfassend Befehle, die bewirken, dass die additive Fertigungsvorrichtung (24) nach einem der vorherigen Ansprüche die Verfahrensschritte nach zumindest einem der vorherigen Verfahrensansprüche ausführt.

34. Computerlesbares Medium (32), auf dem das Computerprogramm nach dem vorherigen Anspruch gespeichert ist.
